# EUROPÄISCHE PATENTSCHRIFT

(11) **EP 2 562 376 B1**
(45) Veröffentlichungstag und Bekanntmachung des Hinweises auf die Patenterteilung: **05.06.2019**
(21) Anmeldenummer: 12002719.8
(22) Anmeldetag: 19.04.2012
(51) Int. Cl.: F01N 3/20

(54) **Betriebsverfahren für ein Fahrzeug**
Operating method for a vehicle
Procédé de fonctionnement pour véhicule

(30) Priorität: 26.08.2011 DE 102011111557
(43) Veröffentlichungstag der Anmeldung: 27.02.2013
(73) Patentinhaber: MAN Truck & Bus AG, 80995 München (DE)
(72) Erfinder: Bruno, Francesco, 85664 Hohenlinden (DE); Franke, Olaf, 80807 München (DE); Kock, Peter, 85646 Anzing (DE)
(74) Vertreter: v. Bezold & Partner Patentanwälte - PartG mbB

(56) Entgegenhaltungen:
- WO-A1-2008/054628
- WO-A1-2011/086026
- DE-A1-102009 000 334
- DE-A1-102010 012 630
- DE-A1-102010 022 559
- US-A1- 2006 184 307
- US-B1- 6 424 924

## Beschreibung

Die Erfindung betrifft ein Betriebsverfahren für ein Fahrzeug, insbesondere ein Nutzfahrzeug wie z.B. einen Lastkraftwagen, einen Omnibus oder ein anderes Kraftfahrzeug.

Aus der WO 2011/086026 A1 ist ein Verfahren zur Bestimmung der aus einem Tank entnommenen Menge einer Flüssigkeit pro Zeiteinheit bekannt, wobei die Flüssigkeit einem Abgas einer Verbrennungskraftmaschine diskontinuierlich zugeführt wird. Das Verfahren umfasst das Zuführen der Flüssigkeit zu dem Abgas über eine Injektionsleitung, das Erfassen von zeitabhängigen Drücken gleichzeitig jeweils an mindestens zwei Stellen in der Injektionsleitung, und das Bestimmen der zugeführten Flüssigkeitsmenge pro Zeiteinheit aus den erfassten Drücken. Zum Stand der Technik können ferner die US 2006/184307 A1 und die WO 2008/054628 A1 genannt werden.

Im Rahmen der Abgasnorm EURO VI soll die Anzahl an Stickoxiden im Abgas von Fahrzeugen reduziert werden. Um diese Reduktion zu erreichen, ist es bekannt, ein Harnstoff-Wasser-Gemisch in den Abgastrakt der Fahrzeuge zu spritzen.

Das Harnstoff-Wasser-Gemisch wird, ähnlich wie andere Betriebsstoffe, in einem separaten Fahrzeugtank gespeichert. Ein Steuergerät errechnet die für die angestrebte Reduktion erforderliche Harnstoff-Wasser-Gemisch-Menge. Die errechnete Harnstoff-Wasser-Gemisch-Menge wird z.B. von einer Pumpe aus dem separaten Fahrzeugtank in den Abgastrakt gefördert. Falls kein oder zu wenig Harnstoff-Wasser-Gemisch in den Abgastrakt gespritzt wird, werden auch keine oder zu wenig Stickoxide abgebaut.

Es ist angestrebt, dass Fahrzeugnutzer das Harnstoff-Wasser-Gemisch tanken, und das Harnstoff-Wasser-Gemisch in ausreichender Menge verwendet wird, z.B. um die Abgasnorm EURO VI einzuhalten.

Eine Aufgabe der Erfindung ist es, sicher zu stellen oder zumindest die Wahrscheinlichkeit zu erhöhen, dass das Harnstoff-Wasser-Gemisch oder eine andere Flüssigkeit in ausreichender Menge verwendet wird, z.B. in den Abgastrakt eines Fahrzeugs gespritzt wird, um eine bestimmte Reduktion an Schadstoffen im Abgas des Fahrzeugs zu erzielen. Diese und andere Aufgaben können insbesondere mit den Merkmalen des unabhängigen Anspruchs gelöst werden.

Erfindungsgemäß wird ein Betriebsverfahren für ein Fahrzeug, vorzugsweise ein Nutzfahrzeug, wie z.B. ein Lastkraftwagen, ein Omnibus, etc., oder ein anderes Kraftfahrzeug vorgesehen.

Das Betriebsverfahren sieht zunächst zweckmäßig vor, einen Füllwert (z.B. Füllstand und/oder Volumenmenge) einer Flüssigkeit in einem Behälter des Fahrzeugs zu ermitteln, zweckmäßig zu einem ersten Zeitpunkt und zu einem zweiten Zeitpunkt.

Vorzugsweise wird die Differenz zwischen dem Füllwert zu dem ersten Zeitpunkt und dem Füllwert zu dem zweiten Zeitpunkt berechnet, um eine zweckmäßig realitätsnahe Flüssigkeitsabnahme zwischen dem ersten Zeitpunkt und dem zweiten Zeitpunkt zu erhalten.

Die Flüssigkeitsabnahme wird vorzugsweise mit einer Referenzmenge verglichen, insbesondere plausibilisiert. Die Referenzmenge ist z.B. so definiert, dass eine bestimmte Reduktion von Schadstoffen im Abgas des Fahrzeugs erzielt wird, insbesondere nicht unterschritten wird. Die Referenzmenge entspricht vorzugsweise einer Referenzabnahme bzw. einem Referenzverbrauch.

Somit kann vorteilhaft eine (tatsächliche bzw. realitätsnahe) Flüssigkeitsabnahme (Ist-Abnahme) mit einer Referenzmenge (Soll-Menge) abgeglichen werden.

Insbesondere kann eine Betriebseinschränkung des Fahrzeugs aktiviert werden, wenn die Flüssigkeitsabnahme die Referenzmenge unterschreitet, vorzugsweise um eine vorbestimmte Größe (insbesondere Menge) und/oder über eine zweckmäßig definierte Zeitspanne bzw. Zeitbereich, also z.B. um eine vorbestimmte Größe über eine zweckmäßig definierte Zeitspanne bzw. Zeitbereich. Der definierte Zeitbereich bzw. Zeitspanne kann z.B. einer definierten Motorbetriebsdauer und/oder der Zeit entsprechen, in der eine definierte Flüssigkeitsabnahme erfolgt ist (also zweckmäßig eine definierte Flüssigkeitsmenge verbraucht worden ist). Dadurch kann sich zweckmäßig eine Abweichung über ein gleitendes Zeitfenster ergeben.

Somit kann in Abhängigkeit von der Unterschreitung bzw. allgemein einer Abweichung zwischen Flüssigkeitsabnahme und Referenzmenge eine Betriebseinschränkung des Fahrzeugs aktiviert werden.

Es ist möglich, dass falls eine Unterschreitung vorliegt, nach einer Karenzzeit die Leistung des Fahrzeugs reduziert wird (z.B. auf 75%). Liegt nach einer weiteren Zeitspanne immer noch eine Unterschreitung vor, kann z.B. die Höchstgeschwindigkeit begrenzt werden (z.B. auf 20 km/h).

Bei einer Abweichung zwischen Ist-Abnahme und Soll-Abnahme kann z.B. davon ausgegangen werden, dass das System manipuliert worden ist, um einen geringeren Flüssigkeitsverbrauch zu erzielen. Um das zu verhindern, können die Betriebseinschränkungen eingeleitet werden.

Der Füllwert zu dem ersten Zeitpunkt und der Füllwert zu dem zweiten Zeitpunkt sind vorzugsweise diskrete Füllwerte.

Im Rahmen der Erfindung kann zweckmäßig die Flüssigkeitsabnahme mit der Referenzmenge über ein Zeit- und/oder Verbrauchsintervall -/zeitraum verglichen, insbesondere plausibilisiert werden.

Das Vergleichen der Flüssigkeitsabnahme mit der Referenzmenge wird insbesondere durchgeführt, um festzustellen, ob eine theoretisch erforderliche Menge an Flüssigkeit, d.h. eine Referenzmenge, auch tatsächlich dem Behälter entnommen wird oder wurde.

Es ist möglich, dass die Referenzmenge durch Aufsummierung einer theoretisch erforderlichen Menge an Flüssigkeit über die Zeit ermittelt wird, insbesondere über den Zeitraum zwischen dem ersten Zeitpunkt und dem zweiten Zeitpunkt.

Insbesondere kann die Referenzmenge ermittelt werden durch Aufsummierung der von einer Funktionseinheit (z.B. eine Pumpe, eine Dosiereinheit, eine Entnahmeeinheit, etc.) des Fahrzeugs angeforderten oder bereitgestellten Menge an Flüssigkeit zweckmäßig über der Zeit, insbesondere über den Zeitraum zwischen dem ersten Zeitpunkt und dem zweiten Zeitpunkt. Somit kann die Referenzmenge z.B. mit der Mengenanforderung an die Entnahmeeinheit der Flüssigkeit errechnet werden.

Als Startzeitpunkt für die Aufsummierung kann die Erkennung einer Füllwertsänderung gewählt werden. Als Endzeitpunkt für die Aufsummierung kann die Erkennung eines anderen Füllwerts gewählt werden (z.B. des nächst kleineren Füllwerts). Ist der Füllwert zum Startzeitpunkt größer als zum Endzeitpunkt, kann von einem Verbrauch ausgegangen werden. In diesem Fall werden die Werte (Soll- und Ist-Verbrauch) verglichen. Ist der Füllwert zum Startzeitpunkt geringer als zum Endzeitpunkt, kann von einer Betankung ausgegangen werden. In diesem Fall werden die Werte (Soll- und Ist-Verbrauch) nicht verglichen.

Die Referenzmenge entspricht vorzugsweise einer theoretisch ermittelten Referenzmenge, die wiederum zweckmäßig einem theoretisch ermittelten Referenzverbrauch entsprechen kann.

Vorzugsweise basiert die Referenzmenge auf z.B. aktuell gemessenen Abgaswerten oder Betriebsparametern (z.B. Geschwindigkeit, Kraftstoffverbrauch, etc.) des Fahrzeugs. Das Betriebsverfahren kann also den Schritt des Erfassens/Messen von Abgaswerten oder Betriebsparametern des Fahrzeugs umfassen.

Folglich ist es möglich, dass in Abhängigkeit der erfassten Abgaswerte oder Betriebsparameter eine Referenzmenge errechnet wird, die z.B. erforderlich ist, um einen bestimmten Abbau von Schadstoffen im Abgas des Fahrzeugs zu erzielen, insbesondere nicht zu unterschreiten. Die Referenzmenge kann aber auch andere Referenzcharakteristika umfassen.

Die Referenzmenge wird vorzugsweise von einem Steuergerät des Fahrzeugs errechnet und vorzugsweise laufend aktualisiert, z.B. während das Fahrzeug fährt oder allgemein der Fahrzeugmotor eingeschaltet ist.

Die Referenzmenge ist vorzugsweise eine dynamisch dimensionierte und/oder veränderbare Referenzmenge, insbesondere deshalb, weil sich die Abgaswerte oder die Betriebsparameter des Fahrzeugs nahezu ständig ändern.

Der Füllwert zu dem ersten Zeitpunkt ist zweckmäßig größer als der Füllwert zu dem zweiten Zeitpunkt, wobei vorzugsweise im gegenteiligen Fall keine Berechnung der Differenz durchgeführt wird.

Es ist möglich, dass der erste Zeitpunkt und der zweite Zeitpunkt einen Zeitraum definieren und Füllwerte und/oder eine Referenzmenge oder Referenzmengen, die vor dem Zeitraum liegen, verworfen werden.

Die Flüssigkeit wird vorzugsweise zur Nachbehandlung von Abgasen genutzt und ist insbesondere ein Harnstoff-Wasser-Gemisch, eine Harnstoff-Wasser-Lösung, etc., also insbesondere ein Harnstoff enthaltendes Fluid, das vorzugsweise die chemische Reduktion von Stickoxiden ermöglicht.

Die Betriebseinschränkung wird vorzugsweise aktiviert in Abhängigkeit von der Motorbetriebsdauer und/oder der Größe der Flüssigkeitsabnahme (d.h. der verbrauchten Flüssigkeitsmenge), während der die Flüssigkeitsabnahme die Referenzmenge unterschreitet.

Mittels eines realitätsnahen Füllwerts kann insbesondere eine realitätsnahe Flüssigkeitsabnahme hergeleitet werden.

Durch die hohe Dynamik einer Flüssigkeit in einem Behälter eines Fahrzeugs (z.B. durch Beschleunigung, Abbremsen, Kurvenfahrt, Schräglage, etc.) ist es unvorteilhaft, direkt gemessene Füllstände unmittelbar z.B. zur Flüssigkeitsverbrauchsberechnung heranzuziehen, weil das zu ungenauen Ergebnissen führt. Dieser Nachteil kann durch das erfindungsgemäße Betriebsverfahren vorteilhaft vermieden werden und zwar insbesondere, indem die Ermittlung des Füllwerts zu dem ersten Zeitpunkt und zu dem zweiten Zeitpunkt zumindest einen der folgenden Schritte umfasst: Messung eines Füllstands der Flüssigkeit in dem Behälter mittels eines Messmittels (z.B. eines Schwimmers), Zuordnung eines gemessenen Füllstands zu einer nächstliegenden Füllstandsschwelle aus einer Vielzahl von Füllstandsschwellen, wobei jede Füllstandsschwelle einen definierten Füllwert repräsentiert, Aktivierung einer Füllstandsschwelle aus der Vielzahl von Füllstandsschwellen mittels des Messmittels, Bestimmung der Frequention (insbesondere der Häufigkeit und/oder der Dauer) einer Aktivierung einer Füllstandsschwelle und/oder der Frequention (insbesondere der Häufigkeit und/oder der Dauer) einer Zuordnung eines gemessenen Füllstands zu einer nächstliegenden Füllstandsschwelle, und Ermittlung der Füllstandsschwelle, die relativ zu einem Zeitraum eine maximale Frequention aufweist und somit einen realitätsnahen Füllwert repräsentiert, insbesondere für die Zeit, während der die nächste Ermittlung durchgeführt wird. Vorstehend genannter Zeitraum kann z.B. verlängert werden, wenn keine eindeutige maximale Frequention vorliegt, z.B. zumindest zwei gleichwertige, d.h. insbesondere gleich oder zumindest nahezu gleich oder ähnlich große, maximale Frequentionen vorliegen. Insbesondere liegt eine eindeutige Frequention vor, wenn die maximale Frequention um einen bestimmten Faktor größer ist als die nächstkleinere Frequention.

Die vorteilhafte Erlangung realitätsnaher Füllwerte führt dazu, dass die ermittelte Flüssigkeitsabnahme von Störgrößen, wie etwa Messrauschen oder anderen z.B. durch Messtechnik bedingte Fehler im Wesentlichen bereinigt ist, und/oder von Fehlmessungen, die insbesondere aufgrund von Schwappen der Flüssigkeit in Abhängigkeit der Fahrsituation entstehen.

Zu erwähnen ist, dass falls keine neue Füllstandsschwelle gemessen wird, obwohl der theoretisch ermittelten Referenzverbrauch/Referenzmenge ansteigt, von einer Fehlfunktion, z.B. einer Dosierunterbrechung, ausgegangen werden kann. Eine solche Fehlfunktion kann zweckmäßig erkannt werden, wenn die Referenzmenge größer ist als die Flüssigkeitsmenge bzw. die Flüssigkeitsabnahme zwischen der aktuellen Füllstandsschwelle und der nächst niedrigeren Füllstandsschwelle. Vorzugsweise kann ab diesem Zeitpunkt für eine Berechnung der Verbrauchsabweichung die Referenzabnahme kontinuierlich angepasst und insbesondere die Flüssigkeitsabnahme mit der Menge zwischen den beiden Füllstandsschwellen verwendet werden.

Bei Fahrzeugen, die im Wesentlichen im Stand betrieben werden, kann es aufgrund einer Schräglage des Fahrzeugs zu einer verfälschten Füllwertermittlung und/oder einer verfälschten Flüssigkeitsabnahmeermittlung kommen. Es ist möglich, dass sich der erste Zeitpunkt und der zweite Zeitpunkt auf dieselbe Stillstandsphase des Fahrzeugs beziehen und/oder sich beide auf ein fahrendes Fahrzeug, insbesondere dieselbe Fahrphase oder unterschiedliche Fahrphasen, beziehen. Was Letzteres anbelangt, sind folgende Fälle denkbar. Fall1: Beide Unterschreitungen werden bei stehendem Fahrzeug erkannt. Zwischen den beiden Erkennungen darf sich das Fahrzeug nicht bewegt haben. Fall2: Beide Unterschreitungen werden bei fahrendem Fahrzeug erkannt unabhängig davon, ob das Fahrzeug in der Zwischenzeit in Bewegung war oder nicht.

Es ist möglich, dass Füllstandsschwellenunterschreitungen verglichen werden, die während der gleichen Stillstandsphase des Fahrzeugs erfasst wurden. Da die Füllstandsschwellenunterschreitungen in der gleichen Schräglage erfasst wurden, entspricht die Differenz vorteilhaft wieder einer realitätsnahen Flüssigkeitsabnahme.

Die Flüssigkeitsabnahme entspricht vorzugsweise einer verbrauchten Flüssigkeitsmenge.

Es ist ersichtlich, dass im Rahmen der Erfindung die realitätsnahe Flüssigkeitsabnahme einer Ist-Abnahme entspricht, die wiederum zweckmäßig einem Flüssigkeitsverbrauch entsprechen kann, während die Referenzmenge einer Soll-Menge entspricht, die zweckmäßig wiederum einer Referenzabnahme bzw. einem Referenzverbrauch entsprechen kann.

Zu erwähnen ist noch, dass eine Berechnung und/oder Speicherung der Abweichung zwischen der Flüssigkeitsabnahme und der Referenzmenge erfolgen kann, z.B. über einen definierten Zeitbereich, insbesondere basierend auf Füllwerten, die in dem definierten Zeitbereich erfasst wurden, und/oder z.B. Füllwerte aus einer früheren Zeit verworfen werden. Hierfür kann z.B. ein Ringspeicher verwendet werden, wobei die ermittelten Flüssigkeitsabnahmen und/oder die Referenzmengen zunächst in einen Ringpuffer eingetragen werden können. Der definierte Zeitbereich entspricht vorzugsweise einer definierten Motorbetriebsdauer und/oder der Zeit, in der eine definierte Flüssigkeitsabnahme erfolgt ist (also zweckmäßig eine definierte Flüssigkeitsmenge verbraucht worden ist), wodurch sich z.B. eine Abweichung über ein gleitendes Zeitfenster ergibt.

Obige erfindungsgemäßen Merkmale und Ausführungsformen sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele der Erfindung in Verbindung mit den beigefügten Figuren.
Figur 1 zeigt eine schematische Prinzipdarstellung der Ermittlung realitätsnaher Füllwerte einer Flüssigkeit in einem Behälter eines Fahrzeugs gemäß einem Ausführungsbeispiel der Erfindung,
Figur 2 zeigt eine beispielhafte Flüssigkeitsabnahme und einen theoretisch ermittelten Referenzverbrauch über die Zeit gemäß einem Ausführungsbeispiel der Erfindung, und
Figur 3 zeigt ein Flussdiagramm eines Betriebsverfahrens gemäß einem Ausführungsbeispiels der Erfindung.

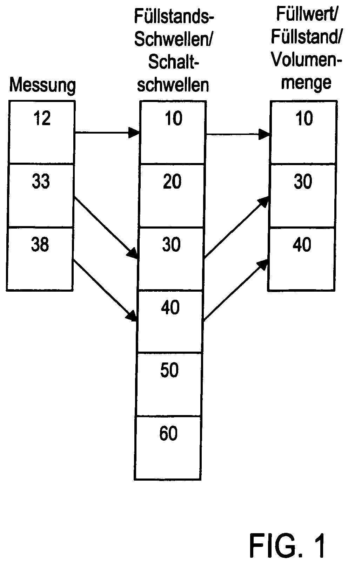

Figur 1 zeigt eine schematische Prinzipdarstellung der Ermittlung realitätsnaher Füllwerte einer Flüssigkeit in einem Behälter eines Fahrzeugs gemäß einem Ausführungsbeispiel der Erfindung. Insbesondere wird ein Füllwert zu einem ersten Zeitpunkt und zu einem zweiten Zeitpunkt ermittelt. Die Flüssigkeit wird zur Nachbehandlung von Abgasen genutzt und ist insbesondere ein Harnstoff-Wasser-Gemisch.

Mittels eines Füllstandsgebers kann ein Füllstand der Flüssigkeit mit Hilfe eines Schwimmers gemessen werden, der in einer Röhre oder außerhalb einer Röhre (z.B. um eine Röhre) in im Wesentlichen vertikaler Richtung bewegbar ist. Innerhalb der Röhre können sich in gleichmäßigen Abständen diskrete Füllstandsschwellen z.B. in Form von Schaltschwellen befinden, die von dem Schwimmer aktivierbar sind, sobald der Schwimmer eine Füllstandsschwelle erreicht. Jede Füllstandsschwelle entspricht einem definierten Füllwert, insbesondere einer Füllstandshöhe und vorzugsweise durch die bekannte Geometrie des Behälters einer Volumenmenge. Aus Figur 1 wird ersichtlich, dass ein gemessener Füllstand (vgl. linke Spalte in Figur 1) nicht direkt für die Ermittlung eines Füllwerts verwendet wird, sondern stattdessen einer nächstgelegen Füllstandsschwelle aus einer Vielzahl bekannter Füllstandsschwellen zugeordnet wird.

Wird z.B. ein Füllstand "12" gemessen, wird dieser Füllstand der Füllstandsschwelle "10" zugeordnet. Ein gemessener Füllstand "33" wird z.B. einer Füllstandsschwelle "30" zugeordnet, während ein Füllstand "38" z.B. einer Füllstandsschwelle "40" zugeordnet wird.

Außerdem wird die Frequention einer Aktivierung einer Füllstandsschwelle mittels des Schwimmers und alternativ oder ergänzend die Frequention einer Zuordnung eines gemessenen Füllstands zu einer nächstliegenden Füllstandsschwelle gezählt, wobei mit Frequention insbesondere Dauer und/oder Häufigkeit gemeint ist.

Anschließend kann die Füllstandsschwelle ermittelt werden, die relativ zu einem definierten Zeitraum eine maximale Frequention aufweist und somit einen realitätsnahen diskreten Füllwert (vgl. rechte Spalte in Figur 1) repräsentiert, insbesondere für die Zeit, während die nächste Ermittlung durchgeführt wird.

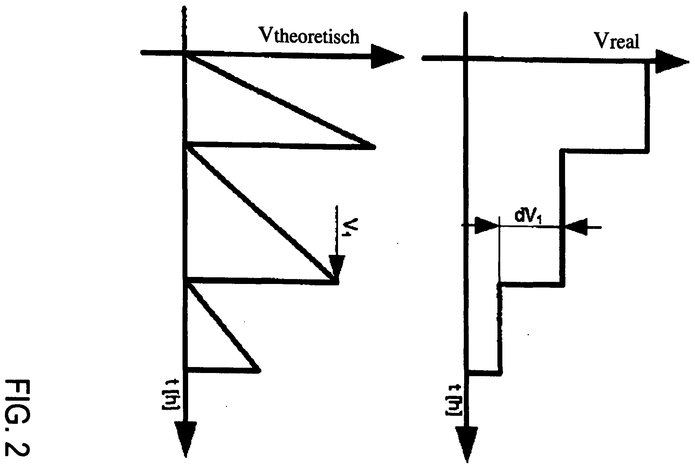

Figur 2 zeigt eine realitätsnahe Flüssigkeitsabnahme und einen theoretisch ermittelten Referenzverbrauch über die Zeit.

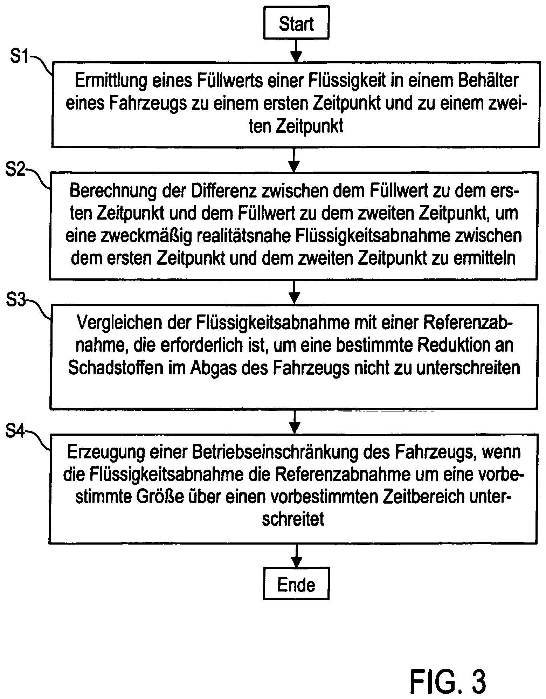

Figur 3 zeigt ein Flussdiagramm eines Betriebsverfahrens gemäß einer Ausführungsform der Erfindung, das in Verbindung mit dem unter Bezugnahme auf die Figuren 1 und 2 dargestellten Prinzip durchführbar ist.

In einem Schritt S1 wird ein vorzugsweise diskreter Füllwert einer Flüssigkeit in einem Behälter eines Fahrzeugs zu einem ersten Zeitpunkt und zu einem zweiten Zeitpunkt ermittelt.

In einem Schritt S2 wird die Differenz zwischen dem Füllwert zu dem ersten Zeitpunkt und dem Füllwert zu dem zweiten Zeitpunkt berechnet, um eine zweckmäßig realitätsnahe Flüssigkeitsabnahme zwischen dem ersten Zeitpunkt und dem zweiten Zeitpunkt zu ermitteln.

In einem Schritt S3 wird die realitätsnahe Flüssigkeitsabnahme mit einer Referenzmenge, die erforderlich ist, um eine bestimmte Reduktion an Schadstoffen im Abgas des Fahrzeugs nicht zu unterschreiten, verglichen. Die Referenzmenge entspricht insbesondere einem theoretisch ermittelten Referenzverbrauch, der z.B. auf erfassten Abgaswerten oder anderen Betriebsparametern des Fahrzeugs basiert.

In einem Schritt S4 wird eine Betriebseinschränkung des Fahrzeugs erzeugt, wenn die realitätsnahe Flüssigkeitsabnahme die Referenzmenge unterschreitet, vorzugsweise um eine vorbestimmte Größe über einen vorbestimmten Zeitbereich/Zeitspanne, insbesondere eine Flüssigkeitsabnahme berechnet wird, die zu gering ist, um eine bestimmte Reduktion von Schadstoffen im Abgas des Fahrzeugs zu erzielen.

Das in Figur 3 gezeigte Betriebsverfahren kann durch eine Vielzahl weiterer Schritte gemäß bevorzugten Ausführungsformen der Erfindung ergänzt oder modifiziert werden.

So kann z.B. die Referenzmenge ermittelt werden durch Aufsummierung der von einer Dosiereinheit oder Pumpe des Fahrzeugs angeforderten oder bereitgestellten Menge an Flüssigkeit über den Zeitraum zwischen dem ersten Zeitpunkt und dem zweiten Zeitpunkt.

Außerdem kann die Berechnung der Differenz zwischen dem Füllwert zu dem ersten Zeitpunkt und dem Füllwert zu dem zweiten Zeitpunkt oder andere Verfahrensschritte ausgesetzt werden, wenn der Füllwert zu dem ersten Zeitpunkt kleiner ist als der Füllwert zu dem zweiten Zeitpunkt.

Die Referenzmenge basiert auf erfassten, sich ändernden Abgaswerten und Betriebsparametern des Fahrzeugs und entspricht somit einer dynamisch dimensionierten Referenzmenge, die von einem Steuergerät des Fahrzeugs errechnet und laufend aktualisierbar ist.

Der erste Zeitpunkt und der zweite Zeitpunkt können sich auf dieselbe Stillstandsphase des Fahrzeugs beziehen oder sich auf ein fahrendes Fahrzeug, insbesondere dieselbe Fahrphase des Fahrzeugs, beziehen.

Die Betriebseinschränkung wird in Abhängigkeit der Motorbetriebsstunden, während der die realitätsnahe Flüssigkeitsabnahme die Referenzmenge um ein vorbestimmtes Maß unterschreitet, aktiviert, und ergänzend oder alternativ in Abhängigkeit der verbrauchten Flüssigkeitsmenge.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand der einzelnen Unteransprüche unabhängig von dem Gegenstand der in Bezug genommenen Ansprüche.

## Patentansprüche

1. Betriebsverfahren für ein Fahrzeug, umfassend die Schritte:
- Ermittlung (S1) eines Füllwerts einer Flüssigkeit in einem Behälter des Fahrzeugs zu einem ersten Zeitpunkt und zu einem zweiten Zeitpunkt,
- Berechnung (S2) der Differenz zwischen dem Füllwert zu dem ersten Zeitpunkt und dem Füllwert zu dem zweiten Zeitpunkt, um eine realitätsnahe Flüssigkeitsabnahme zwischen dem ersten Zeitpunkt und dem zweiten Zeitpunkt zu erhalten,
- Vergleichen (S3) der realitätsnahen Flüssigkeitsabnahme mit einer Referenzmenge, die vorzugsweise erforderlich ist, um eine bestimmte Reduktion von Schadstoffen im Abgas des Fahrzeugs zu erzielen, und
- Erzeugung (S4) einer Betriebseinschränkung des Fahrzeugs, wenn die Flüssigkeitsabnahme die Referenzmenge unterschreitet, vorzugsweise um eine vorbestimmte Größe und/oder über einen definierten Zeitbereich.

2. Betriebsverfahren nach Anspruch 1, wobei die Referenzmenge erhalten wird durch Aufsummierung einer theoretisch erforderlichen Menge an Flüssigkeit über den Zeitraum zwischen dem ersten Zeitpunkt und dem zweiten Zeitpunkt.

3. Betriebsverfahren nach Anspruch 1 oder 2, wobei die Referenzmenge erhalten wird durch Aufsummierung der von einer Funktionseinheit des Fahrzeugs angeforderten oder bereitgestellten Menge an Flüssigkeit über den Zeitraum zwischen dem ersten Zeitpunkt und dem zweiten Zeitpunkt.

4. Betriebsverfahren nach einem der vorhergehenden Ansprüche, wobei der Füllwert zu dem ersten Zeitpunkt größer ist als der Füllwert zu dem zweiten Zeitpunkt, vorzugsweise im gegenteiligen Fall keine Berechnung der Differenz durchgeführt wird.

5. Betriebsverfahren nach einem der vorhergehenden Ansprüche, wobei der erste Zeitpunkt und der zweite Zeitpunkt einen Zeitraum definieren und Füllwerte und eine Referenzmenge oder Referenzmengen, die vor dem Zeitraum liegen, verworfen werden.

6. Betriebsverfahren nach einem der vorhergehenden Ansprüche, wobei der erste Zeitpunkt und der zweite Zeitpunkt
- sich auf dieselbe Stillstandsphase des Fahrzeugs beziehen, und/oder
- sich auf ein fahrendes Fahrzeug, insbesondere dieselbe Fahrphase oder unterschiedliche Fahrphasen des Fahrzeugs, beziehen.

7. Betriebsverfahren nach einem der vorhergehenden Ansprüche, wobei die Flüssigkeit zur Nachbehandlung von Abgasen genutzt wird und insbesondere ein Harnstoff-Wasser-Gemisch ist.

8. Betriebsverfahren nach einem der vorhergehenden Ansprüche, wobei die Betriebseinschränkung in Abhängigkeit von der Motorbetriebsdauer, während der die Flüssigkeitsabnahme die Referenzmenge unterschreitet, aktiviert wird.

9. Betriebsverfahren nach einem der vorhergehenden Ansprüche, wobei die Referenzmenge eine dynamisch dimensionierte Referenzmenge ist und/oder auf erfassten Abgaswerten oder Betriebsparametern des Fahrzeugs basiert.

10. Betriebsverfahren nach einem der vorhergehenden Ansprüche, wobei eine Berechnung der Abweichung zwischen der Flüssigkeitsabnahme und der Referenzmenge über einen definierten Zeitbereich erfolgt und vorzugsweise der definierte Zeitbereich einer definierten Motorbetriebsdauer oder der Zeit, in der eine definierte Menge an Flüssigkeit verbraucht worden ist, entspricht, wodurch sich eine Abweichung über ein gleitendes Zeitfenster ergibt.

11. Betriebsverfahren nach einem der Ansprüche 2 bis 10, wobei als Startzeitpunkt für die Aufsummierung die Erkennung einer Füllwertänderung gewählt wird und/oder als Endzeitpunkt für die Aufsummierung die Erkennung des nächst kleineren, vorzugsweise diskreten, Füllwerts gewählt wird.

12. Betriebsverfahren nach einem der vorhergehenden Ansprüche, wobei die Ermittlung eines Füllwerts der Flüssigkeit in dem Behälter des Fahrzeugs zumindest einen der folgenden Schritte umfasst:
- Messung eines Füllstands der Flüssigkeit in dem Behälter mittels eines Messmittels,
- Zuordnung eines gemessenen Füllstands zu einer nächstliegenden Füllstandsschwelle aus einer Vielzahl von Füllstandsschwellen, wobei jede Füllstandsschwelle einen definierten Füllwert repräsentiert,
- Aktivierung einer Füllstandsschwelle aus der Vielzahl von Füllstandsschwellen mittels des Messmittels,
- Bestimmung der Frequention einer Aktivierung einer Füllstandsschwelle und/oder der Frequention einer Zuordnung eines gemessenen Füllstands zu einer nächstliegenden Füllstandsschwelle, und
- Ermittlung der Füllstandsschwelle, die relativ zu einem Zeitraum eine maximale Frequention aufweist und somit einen realitätsnahen Füllwert repräsentiert, insbesondere für die Zeit, während der die nächste Ermittlung durchgeführt wird.

## Claims

1. An operating method for a vehicle, comprising the steps:
- determining (S1) of a filling value of a liquid in a container of the vehicle at a first time and at a second time,
- calculating (S2) of the difference between the filling value at the first time and the filling value at the second time, in order to obtain a close-to-reality liquid decrease between the first time and the second time,
- comparing (S3) of the close-to-reality liquid decrease with a reference quantity which is preferably required to achieve a defined reduction of pollutants in the exhaust gas of the vehicle, and
- generating (S4) of an operating restriction of the vehicle if the liquid decrease undershoots the reference quantity, preferably by a predefined amount and/or over a defined time span.

2. The operating method according to Claim 1, the reference quantity being obtained by way of adding up of a theoretically required quantity of liquid over the time period between the first time and the second time.

3. The operating method according to Claim 1 or 2, the reference quantity being obtained by way of adding up of the quantity of liquid which is provided or requested by a functional unit of the vehicle over the time period between the first time and the second time.

4. The operating method according to one of the preceding claims, the filling value at the first time being greater than the filling value at the second time, no calculation of the difference preferably being carried out in the converse case.

5. The operating method according to one of the preceding claims, the first time and the second time defining a time period, and filling values and a reference quantity or reference quantities which lies before the time period being discarded.

6. The operating method according to one of the preceding claims, the first time and the second time
- relate to the same standstill phase of the vehicle, and/or
- relate to a moving vehicle, in particular to the same driving phase or different driving phases of the vehicle.

7. The operating method according to one of the preceding claims, the liquid being used for the aftertreatment of exhaust gases and being, in particular, a urea/water mixture.

8. The operating method according to one of the preceding claims, the operating restriction being activated in a manner which is dependent on the engine operating duration, during which the liquid decrease undershoots the reference quantity.

9. The operating method according to one of the preceding claims, the reference quantity being a dynamically dimensioned reference quantity and/or being based on detected exhaust gas values or operating parameters of the vehicle.

10. The operating method according to one of the preceding claims, a calculation of the deviation between the liquid decrease and the reference quantity taking place over a defined time span, and the defined time span preferably corresponding to a defined engine operating duration or the time, in which a defined quantity of liquid has been consumed, which results in a deviation over a sliding time window.

11. The operating method according to one of Claims 2 to 10, the detection of a filling value change being selected as the starting time for the adding up, and/or the detection of the next smaller, preferably discrete filling value being selected as the end time.

12. The operating method according to one of the preceding claims, the determining of a filling value of the liquid in the container of the vehicle comprising at least one of the following steps:
- measuring of a filling level of the liquid in the container by means of a measuring means,
- assigning of a measured filling level to a closest filling level threshold from a multiplicity of filling level thresholds, each filling level threshold representing a defined filling value,
- activating of one filling level threshold from the multiplicity of filling level thresholds by means of the measuring means,
- determining of the frequention of an activation of a filling level threshold and/or the frequention of an assignment of a measured filling level to a closest filling level threshold, and
- determining of the filling level threshold which has a maximum frequention relative to a time period and therefore represents a close-to-reality filling value, in particular for the time, during which the next determination is carried out.

## Revendications

1. Procédé de fonctionnement d'un véhicule, comprenant les étapes suivantes :
- détermination (S1) d'une valeur de remplissage en liquide d'un réservoir du véhicule à un premier moment et à un second moment,
- calcul (S2) de la différence entre la valeur de remplissage au premier moment et la valeur de remplissage au second moment afin d'obtenir une diminution de liquide proche de la réalité entre le premier moment et le second moment,
- comparaison (S3) de la diminution de liquide proche de la réalité à une quantité de référence qui est de préférence nécessaire pour atteindre une certaine réduction des polluants dans le gaz d'échappement du véhicule, et
- création (S4) d'une restriction de fonctionnement du véhicule si la diminution de liquide passe en dessous de la quantité de référence, de préférence à raison d'une grandeur prédéfinie et/ou d'un laps de temps prédéfini.

2. Procédé de fonctionnement selon la revendication 1, dans lequel la quantité de référence est obtenue en totalisant une quantité théoriquement nécessaire de liquide sur la période comprise entre le premier moment et le second moment.

3. Procédé de fonctionnement selon la revendication 1 ou 2, dans lequel la quantité de référence est obtenue en totalisant la quantité exigée par une unité fonctionnelle du véhicule ou mise à disposition sur la période comprise entre le premier moment et le second moment.

4. Procédé de fonctionnement selon une des revendications précédentes, dans lequel la valeur de remplissage au premier moment est supérieure à la valeur de remplissage au second moment, sachant que, de préférence, dans le cas contraire, aucun calcul de la différence n'est réalisé.

5. Procédé de fonctionnement selon une des revendications précédentes, dans lequel le premier moment et le second moment définissent une période et les valeurs de remplissage et une quantité de référence ou des quantités de référence qui se situent avant cette période sont rejetées.

6. Procédé de fonctionnement selon une des revendications précédentes, dans lequel le premier moment et le second moment
- se rapportent à la même phase d'immobilisation du véhicule, et
- se rapportent à un véhicule en circulation, en particulier à la même phase de conduite et à des phases de conduite différentes du véhicule.

7. Procédé de fonctionnement selon une des revendications précédentes, dans lequel le liquide est utilisé pour le post-traitement des gaz d'échappement et est en particulier un mélange d'urée et d'eau.

8. Procédé de fonctionnement selon une des revendications précédentes, dans lequel la section de fonctionnement est activée en fonction de la durée de fonctionnement du moteur pendant laquelle la diminution de liquide passe en-dessous de la quantité de référence.

9. Procédé de fonctionnement selon une des revendications précédentes, dans lequel la quantité de référence est une quantité de préférence à dimension dynamique et/ou est basée sur des valeurs de gaz d'échappement des paramètres de fonctionnement détectés du véhicule.

10. Procédé de fonctionnement selon une des revendications précédentes, dans lequel un calcul de l'écart entre la diminution de liquide et la quantité de référence a lieu sur un laps de temps défini, et le laps de temps défini équivaut de préférence à une durée de fonctionnement définie du moteur à la durée pendant laquelle une quantité définie de liquide a été consommée, ce qui donne un écart par rapport à un créneau temporel glissant.

11. Procédé de fonctionnement selon une des revendications 2 à 10, dans lequel la détection d'une modification de valeur de remplissage est sélectionnée comme moment de départ pour la totalisation et/ou la détection de la valeur de remplissage suivante la plus faible, de préférence discrète, est sélectionnée comme moment final pour la totalisation.

12. Procédé de fonctionnement selon une des revendications précédentes, dans lequel la détermination d'une valeur de remplissage en liquide du réservoir du véhicule comprend au moins une des étapes suivantes :
- mesure d'un niveau de remplissage en liquide du réservoir au moyen d'un moyen de mesure,
- affectation d'un niveau de remplissage mesuré à un seuil de niveau de remplissage le plus proche parmi une pluralité de seuils de niveau de remplissage, chaque seuil de niveau de remplissage représentant une valeur de remplissage définie,
- activation d'un seuil de remplissage parmi la pluralité de seuils de remplissage au moyen du moyen de mesure,
- définition de la fréquence d'une activation d'un seuil de niveau de remplissage et/ou de la fréquence d'affectation d'un niveau de mesure mesuré à un seuil de niveau de remplissage le plus proche, et
- détermination du seuil de niveau de remplissage qui présente une fréquence maximale par rapport à une période et représente ainsi une valeur de remplissage proche de la réalité, en particulier pour la période pendant laquelle la détermination suivante est réalisée.
